# EUROPÄISCHE PATENTSCHRIFT

(11) **EP 1 357 304 B1**
(45) Veröffentlichungstag und Bekanntmachung des Hinweises auf die Patenterteilung: **19.07.2006**
(21) Anmeldenummer: 03005973.7
(22) Anmeldetag: 18.03.2003
(51) Int. Cl.: F16B 37/04

(54) **Verankerungseinheit**
Anchor-unit
Dispositif d'ancrage

(30) Priorität: 25.04.2002 DE 10218602
(43) Veröffentlichungstag der Anmeldung: 29.10.2003
(73) Patentinhaber: Sikla GmbH & Co. KG, 78595 Hausen o.V. (DE)
(72) Erfinder: Warkus, Clemens, 88605 Messkirch (DE)
(74) Vertreter: Maucher, Wolfgang

(56) Entgegenhaltungen:
- EP-A- 0 837 256
- US-A- 4 661 030
- US-A- 4 840 525
- PATENT ABSTRACTS OF JAPAN vol. 2002, no. 02, 2. April 2002 (2002-04-02) & JP 2001 280317 A (OONISHI MASAKATSU), 10. Oktober 2001 (2001-10-10)

## Beschreibung

Die Erfindung betrifft eine Verankerungseinheit zur Befestigung von Montagewinkeln oder dergleichen Gegenständen, mit einem Stützteil, welches in eine Montageöffnung eines insbesondere durch eine Montageschiene gebildeten Hohlkörpers einführbar ist, wobei das Stützteil in seiner Länge größer als in seiner Breite ist und im Hohlkörper-Inneren derart verdrehbar ist, dass das Stützteil an gegenüberliegenden Hohlkörper-Längsseiten innenseitig vorgesehene Haltevorsprünge hintergreifen kann, sowie mit einem als Zwischenlagekörper ausgestalteten Vormontagehalter, der einen mit dem Stützteil drehfest verbundenen Halteabschnitt aufweist, welcher Halteabschnitt mit zumindest zwei Federarmen verbunden ist, welche die die Montageöffnung begrenzenden Ränder der Hohlkörper-Längsseiten beaufschlagen können, wobei die Federarme zumindest in einem Teilbereich ihrer Außenränder in entgegengesetzte Richtungen orientierte Krümmungslinien begrenzen und stegförmig ausgebildet sind, dass die Projektion der Federarme auf die Ebene der Montageöffnung des Hohlkörpers eine gekrümmte Form zeigt.

Eine Verankerungseinheit der eingangs erwähnten Art ist bereits aus der DE 197 05 709 A1 bekannt. Die vorbekannte Verankerungseinheit weist ein Stützteil auf, das mit einem als im wesentlichen flacher Zwischenlagekörper ausgebildeten Vormontagehalter verbunden ist. Dieser Vormontagehalter hat zwei Federarme, die zu einer zentralen Gewindebohrung des Stützteiles etwa symmetrisch angeordnet sind. Beim Einführen des Stützteiles der vorbekannten Verankerungseinheit in die Montageöffnung beaufschlagt der Vormontagehalter außenseitig die die Montageöffnung begrenzenden Hohlkörper-Längsränder. Durch Eindrücken des Stützteils in das Hohlkörper-Innere und Drehen der Verankerungseinheit kann diese in eine Vormontagestellung gebracht werden, in der das Stützteil an gegenüberliegenden Hohlkörper-Längsseiten innenseitig vorgesehene Haltevorsprünge hintergreift und von der Federkraft der mit ihren Federarmen durch die Montageöffnung greifenden Vormontagehalterung ausreichend fest gegen diese Haltevorsprünge gepresst wird, so dass die Verankerungseinheit im Hohlkörper noch verschoben und dadurch in der gewünschten Lage positioniert werden kann, ohne dass jedoch das Stützteil in dieser Vormontagestellung sich unbeabsichtigt in SchienenLängsrichtung verdrehen und aus der Schienenöffnung herausfallen kann.

Das Eindrücken des Stützteils in das Hohlkörper-Innere und das nachfolgende Verdrehen der vorbekannten Verankerungseinheit fordert dem Anwender eine gewisse Sorgfalt ab.

Aus der US-A-4 840 525 ist eine Montageschiene vorbekannt, die als längsseitig geschlitzte Profilschiene ausgebildet ist und der zumindest eine Verankerungseinheit zugeordnet ist. Die zum Eingriff in die Profilschiene bestimmte Verankerungseinheit hat ein plattenförmiges und mit einer Gewindeöffnung versehenes Stützteil, an dem ein als Zwischenlagekörper ausgestalteter Vormontagehalter gehalten ist. Der Vormontagehalter weist einen Basisring mit zentraler Öffnung auf, an dem zwei sich nach außen erstreckende Flügel vorgesehen sind. Wird das Stützteil der vorbekannten Verankerungseinheit über die Schienenöffnung in das Innere der Montageschiene gedrückt, lässt sich die aus dem Stützteil und dem Vormontagehalter bestehende Einheit derart verdrehen, dass sich das in Längsrichtung erstreckende Stützteil unterhalb der die Schienenöffnung begrenzenden Schienenränder der Montageschiene zu liegen kommt. Wird das Stützteil auf diese Weise in seine Halteposition gedreht, wird der Vormontagehalter mit seinen Flügeln gleichzeitig gegen die äußere Oberfläche der Montageschiene gedrückt, so dass dieser das Stützteil reibungsbedingt in einer Vormontageposition an der Montageschiene zu halten vermag. Um den Vormontagehalter der vorbekannten Verankerungseinheit in seine Vormontageposition zu bringen, ist eine bewusste und aktive Drehbewegung des Anwenders beim Hineinstoßen der Verankerungseinheit in die Profilschiene erforderlich.

Aus der EP-A-0 837 256 kennt man auch bereits eine Verankerungseinheit mit einem Stützteil, dem ein Vormontagehalter in Einführrichtung vorgeschaltet ist. Dieser Vormontagehalter der vorbekannten Verankerungseinheit hat an seinen gegenüberliegenden Schmalseiten jeweils einen Federarm, wobei die parallelen Federarme mit ihren freien Federarm-Enden in entgegengesetzte Richtungen orientiert sind. Das Stützteil dieser vorbekannten Verankerungseinheit ist an seinen Schmalseiten derart angeschnitten, dass die Federarme an den am Stützteil schmalseitig vorgesehenen Aussparungen vorbei die die Montageöffnung begrenzenden Ränder außenseitig mit ihren abgewinkelten Federarm-Enden hintergreifen können. Wird auch diese Verankerungseinheit in das Hohlkörper-Innere gedrückt, lassen die Federarme das Stützteil im Hohlkörper-Inneren derart rotieren, bis ihr Stützteil die Haltevorsprünge hintergreift. Anschließend wird die Verankerungseinheit durch die Federkraft der mit ihren freien Federarm-Enden an dem Hohlkörper außenseitig angreifenden Federarme sicher in dieser Vormontageöffnung gehalten. Der Drehwinkel und damit die Belastbarkeit der vorbekannten Verankerungseinheit ist jedoch erheblich reduziert. Zwar könnte der Drehwinkel durch längere Federarme erhöht werden, - solche längeren Federarme würden jedoch anschließend erheblich über den Hohlkörper seitlich vorstehen. Darüber hinaus erfordert auch die Handhabung dieser vorbekannten Verankerungseinheit vom Anwender einen gewissen Aufwand und eine Sorgfalt, die insbesondere unter beengten Platzverhältnissen und unter Zeitdruck nur schwer aufzubringen sind.

Es besteht daher insbesondere die Aufgabe, eine Verankerungseinheit zu schaffen, die sich durch eine vereinfachte Handhabung auszeichnen.

Die erfindungsgemäße Lösung dieser Aufgabe besteht bei der Verankerungseinheit der eingangs erwähnten Art insbesondere darin, dass die Außenränder der Federarme in ihren gekrümmten Teilbereich Drehführungsabschnitte bilden, die mit den die Montageöffnung begrenzenden Rändern des Hohlkörpers zusammenwirken können, derart, dass der Vormontagehalter eine den Halteabschnitt und den angrenzenden Teilbereich der Federarme in das Hohlkörper-Innere pressende Druckkraft auf den Halteabschnitt in eine Drehbewegung des Vormontagehalters und des mit ihm drehfest verbundenen Stützteils umsetzt.

Der mit der erfindungsgemäßen Verankerungseinheit mögliche hohe Drehwinkel erlaubt eine hohe Belastbarkeit in Vormontagestellung, ohne dass die Federarme wesentlich über den Hohlkörper überstehen. Dabei werden die an den Rändern der Montageöffnung anliegenden Außenränder der Federarme durch bloßes Eindrücken des an der erfindungsgemäßen Verankerungseinheit vorgesehenen Stützteils als Drehführungsabschnitte wirksam, welche die aufgebrachte Druckkraft in eine Drehbewegung des Vormontagehalters und des mit ihm drehfest verbundenen Stützteils umsetzen. Da die erfindungsgemäße Verankerungseinheit mit ihrem Stützteil somit nur in das Hohlkörper-Innere gepresst werden muss, bis von selbst dessen Drehbewegung wahrnehmbar ist, wird die Handhabung der erfindungsgemäßen Verankerungseinheit wesentlich vereinfacht.

Die Federarme können besonderes gut als Drehführungen wirken und gleichzeitig eine ausreichende Federkraft aufbringen, wenn die Federarme stegförmig ausgestaltet sind.

Um beim Eindrücken des Stützteils in das Hohlkörper-Innere keine zusätzlichen störenden Kippkräfte zu erzeugen, ist es zweckmäßig, wenn die Federarme punktsymmetrisch zum Halteabschnitt ausgestaltet sind.

Besonders vorteilhaft ist es, wenn zwischen dem Halteabschnitt des Vormontagehalters einerseits und den Drehführungsabschnitten der Federarme andererseits über den Halteabschnitt radial vorstehende Verbindungsabschnitte vorgesehen sind. Diese radialen Verbindungsabschnitte können besonders gut die auf die Federarme einwirkenden Kräfte übertragen.

Beim Eindrücken des Stützteils bilden die Drehführungsabschnitte der Federarme eine schiefe Ebene, welche eine Drehbewegung der erfindungsgemäßen Verankerungseinheit begünstigt, wenn die Federarme beim Einlegen des Stützteils in die Montageöffnung die die Montageöffnung begrenzenden Ränder bereits mit ihren Drehführungsabschnitten beaufschlagen.

Eine bevorzugte Ausführungsform gemäß der Erfindung sieht vor, dass die Federarme auf der dem Halteabschnitt abgewandten Seite ihrer Drehführungsabschnitte Einspannabschnitte haben, und dass diese Einspannabschnitte in Vormontagestellung etwa parallel zu den Hohlkörper-Längsseiten angeordnet sind.

Diese Einspannabschnitte sind parallel zu den Hohlkörper-Längsseiten angeordnet, so dass der als Zwischenlagekörper ausgestaltete Vormontagehalter in seiner Vormontagestellung nicht unnötig über den Hohlkörper seitlich vorsteht.

Die Verankerungseinheit lässt sich auch mit einer vergleichsweise hohen Federkraft ihrer Federarme in der Vormontagestellung sichern, wenn der Vormontagehalter als plattenförmige Flachfeder mit einem vorzugsweise umlaufenden äußeren Einspannrandbereich ausgestaltet ist, und wenn dieser Einspannrandbereich mit dem Halteabschnitt über die Federarme verbunden ist.

Eine Weiterbildung gemäß der Erfindung sieht vor, dass die Verankerungseinheit mit dem zu befestigenden Gegenstand über eine Schraube, eine Gewindestange oder dergleichen Verbindungselement verbunden ist, dass das Verbindungselement eine Durchstecköffnung des zu befestigenden Gegenstandes durchsetzt und dass auf das Verbindungselement zumindest eine Druckfeder oder dergleichen Druckelement aufgeschoben ist, dessen Druckkraft vorzugsweise größer als die Federkraft der Federarme ist. Somit kann beispielsweise durch einen einfachen Druck auf den zu befestigenden Gegenstand die Drehbewegung der Verankerungseinheit ausgelöst werden, wobei die der Verankerungseinheit an diesem Gegenstand vorstehende Verbindungselement die Drehbewegung der Verankerungseinheit ausgelöst werden, wobei die der verankerungseinheit an diesem Gegenstand bis dahin Halt gebende Druckfeder beim Festschrauben des zu befestigenden Gegenstandes derart komprimiert werden kann, dass die Druckfeder ein Anlegen des Gegenstandes an die Hohlkörper-Längsseiten nicht verhindert.

Weitere Merkmale der Erfindung ergeben sich aus der folgenden Beschreibung, erfindungsgemäße Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.
Es zeigt:
- Fig. 1: eine in einer perspektivischen Darstellung gezeigte Verankerungseinheit, die einen Vormontagehalter sowie ein damit drehfest verbundenes Stützteil aufweist,
- Fig. 2: die Verankerungseinheit aus Figur 1 in einer Draufsicht auf den Vormontagehalter,
- Fig. 3: den Vormontagehalter der in den Figuren 1 und 2 gezeigten Verankerungseinheit in einer perspektivischen Darstellung,
- Fig. 4: den Vormontagehalter aus den Figuren 1 bis 3 in einer Draufsicht,
- Fig. 5: die mittels einer Schraube mit einem zu befestigenden Gegenstand verbundene Verankerungseinheit aus Figur 1 und 2 in einer perspektivischen Unteransicht,
- Fig. 6: die mit dem Gegenstand verbundene Verankerungseinheit aus Figur 5 in einer teilweise quer geschnittenen Seitenansicht,
- Fig. 7: eine mit einem zu befestigenden Gegenstand verbundene und mit Figur 1 bis 6 vergleichbare Verankerungseinheit in einer Seitenansicht, wobei zwischen dem Vormontagehalter der Verankerungseinheit und dem zu befestigenden Gegenstand eine Druckfeder vorgesehen ist, welche die Schraube durchsetzt,
- Fig. 8: die Verankerungseinheit aus Figur 7 in einer perspektivischen Darstellung,
- Fig. 9: einen plattenförmigen Vormontagehalter einer mit den Figuren 1 und 2 vergleichbaren Verankerungseinheit in einer perspektivischen Darstellung und
- Fig. 10: den Vormontagehalter aus Figur 9 in einer Draufsicht.

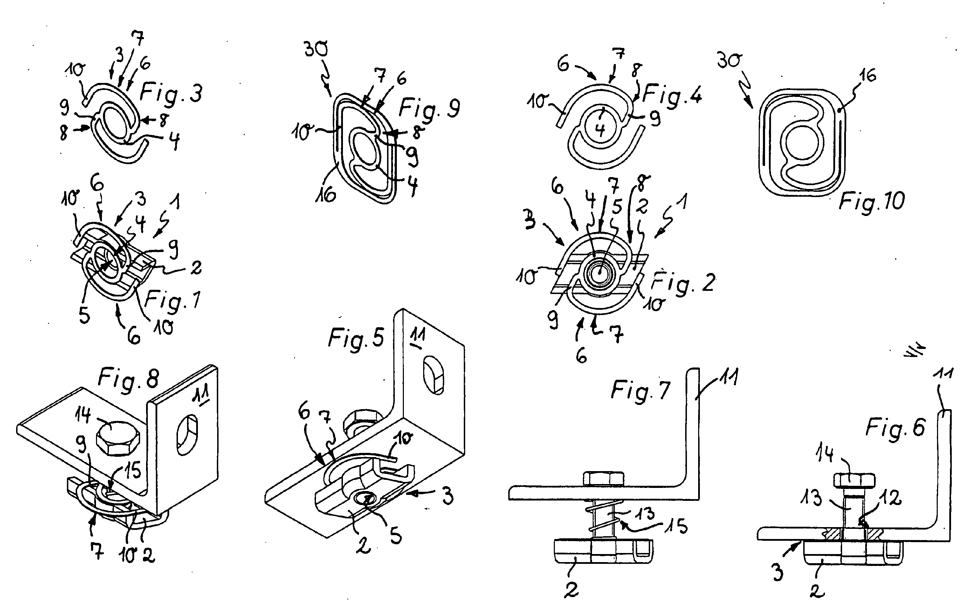

In den Figuren 1 bis 8 ist eine Verankerungseinheit 1 dargestellt, die zur Befestigung von Montagewinkeln oder dergleichen Gegenständen an einer hier nicht dargestellten Montageschiene oder dergleichen Hohlkörper dient. Die Verankerungseinheit 1 hat ein Stützteil 2, welches in die Montageöffnung des Hohlkörpers einführbar und im Hohlkörper-Inneren derart verdrehbar ist, dass das Stützteil 2 an gegenüberliegenden Hohlkörper-Längsseiten innenseitig vorgesehene Haltevorsprünge hintergreift.

Die Verankerungseinheit 1 weist einen in den Figuren 3, 4, 9 und 10 noch näher dargestellten Vormontagehalter 3 auf, der einen mit dem Stützteil 2 verklebten, verschweißten, verstemmten oder dergleichen drehfest verbundenen Halteabschnitt 4 hat. Der ringförmig ausgestaltete Halteabschnitt 4, dessen Ringöffnung mit einer zentralen Gewindeöffnung 5 im Stützteil 2 fluchtet, ist mit zwei Federarmen 6 verbunden. Die Federarme 6 begrenzen in einem Teilbereich ihrer Außenränder in entgegengesetzte Längsrichtungen orientierte Krümmungslinien 7 und beaufschlagen die die Montageöffnung begrenzenden Ränder der Hohlkörper-Längsseiten.

Die Außenränder 7 der Federarme 6 bilden in ihrem gekrümmten Teilbereich mit den die Montageöffnung begrenzenden Rändern des Hohlkörpers zusammenwirkende Drehführungsabschnitte, derart, dass der Vormontagehalter 3 eine den Halteabschnitt 4 und den angrenzenden Teilbereich der Federarme in das Hohlkörper-Innere pressende Druckkraft auf den Halteabschnitt 4 in eine Drehbewegung des Vormontagehalters 3 und des mit ihm drehfest verbundenen Stützteils 2 umsetzt.

Durch bloßes Eindrücken des an der Verankerungeinheit 1 vorgesehenen Stützteils 2 werden die an den Rändern der Montageöffnung anliegenden Außenränder der Federarme 6 als Drehführungsabschnitte 7 wirksam, die die aufgebrachte Druckkraft in eine Drehbewegung des Vormontagehalters und des mit ihm drehfest verbundenen Stützteils 2 umsetzen. Da die Verankerungseinheit 1 mit ihrem Stützteil 2 somit nur in das Hohlkörper-Innere gepresst werden muss, bis von selbst dessen Drehbewegung wahrnehmbar ist, zeichnet sich die Verankerungseinheit 1 durch eine besonders einfache Handhabung aus.

Aus den Figuren 1 bis 10 wird deutlich, dass die an den Vormontagehaltern 3 vorgesehenen Federarme 6 stegförmig ausgebildet sind. Um beim Eindrücken des Stützteils 2 keine unerwünschten Kippkräfte zu erzeugen, sind die Federarme 6 punktsymmetrisch zum Halteabschnitt 4 und zu der damit fluchtenden Gewindeöffnung 5 im Stützteil 2 angeordnet.

In den Draufsichten in Figur 4 und 10 ist erkennbar, dass zwischen dem Halteabschnitt 4 des Vormontagehalters 3 einerseits und den Drehführungsabschnitten 7 der Federarme 6 andererseits über den Halteabschnitt 4 radial vorstehende Verbindungsabschnitte 9 vorgesehen sind. Wird die Verankerungseinheit 1 zum Eindrücken ihres Stützteils 2 in die Montageöffnung auf eine Montageschiene aufgelegt, sind die Verbindungsbereiche 8 zwischen den Drehführungsabschnitten 7 und den Verbindungsabschnitten 9 noch im Bereich der Montageöffnung angeordnet, derart, dass die Federarme 6 beim Einlegen des Stützteils 2 in die Montageöffnung die die Montageöffnung begrenzenden Ränder mit ihren Drehführungsabschnitten 7 beaufschlagen. Beim Eindrücken des Stützteiles 2 werden die Federarme 6 somit in eine schiefe Ebene verformt, die der Verankerungseinheit 1 unter Umsetzung der Druckkraft in eine Drehbewegung die Drehrichtung vorgibt.

Aus den Figuren 1 bis 4, 9 und 10 wird deutlich, dass die Federarme 6 auf der dem Halteabschnitt 4 abgewandten Seite ihrer Drehführungsabschnitte 7 Einspannabschnitte 10 haben. Diese Einspannabschnitte 10 sind in Vormontagestellung etwa parallel zu den Hohlkörper-Längsseiten angeordnet, so dass der als Zwischenlagekörper ausgebildete Vormontagehalter 3 nicht unnötig seitlich über den Hohlkörper übersteht. In der Halte- oder Vormontagestellung können die Schmalseiten des Stützteiles 2 an den inneren Längsseiten des Hohlkörpers anliegen und die weitere Drehbewegung des Vormontagehalters 3 zusätzlich begrenzen. Das hier dargestellte Stützteil 2 ist etwa parallelogrammförmig ausgestaltet und in der Halte- oder Vormontagestellung mit seinen schrägen Schmalseiten parallel zu den Hohlkörper-Längsseiten angeordnet.

In den Figuren 5 und 6 ist angedeutet, dass mit Hilfe der Verankerungseinheit 1 beispielsweise ein Montage- oder Tragwinkel 11 an einer Montageschiene befestigt werden kann. Der Tragwinkel 11 weist dazu eine Durchstecköffnung 12 auf, die eine Verbindungsschraube 13 durchsetzt. Die Gewindeschraube 13 ist mit ihrem dem Schraubenkopf 14 abgewandten Gewindeabschnitt in die Gewindeöffnung 5 am Stützteil 2 eingeschraubt. Somit kann die Verankerungseinheit 1 beispielsweise an dem über den Tragwinkel 11 überstehenden Schraubenkopf 14 ergriffen, oberhalb der Montageöffnung des Hohlkörpers in Position gebracht und mit ihrem Stützteil 2 derart in das Hohlkörper-Innere eingedrückt werden, bis der Vormontagehalter 3 das Stützteil 2 im Hohlkörper-Inneren in seine Vormontage- oder Haltestellung verdreht.

Die Handhabung der Verankerungseinheit 1 wird noch zusätzlich vereinfacht, wenn auf die Verbindungsschraube 13 - wie in Figur 7 und 8 dargestellt - eine wendelförmige Druckfeder 15 aufgeschoben wird, die zwischen dem Tragwinkel 11 oder dergleichen Gegenstand und der Verankerungseinheit 1 angeordnet ist und deren Druckkraft größer als die Federkraft der Federarme 6 ist. Diese vorgespannte Druckfeder 15 hält die Verankerungseinheit 1 derart am Tragwinkel 11 oder dergleichen Gegenstand in Position, dass die Verbindungsschraube 13 mit ihrem Schraubenkopf 14 an dem die Durchstecköffnung 12 begrenzenden Randbereich des Tragwinkels 11 anliegt. Wird die in Figur 8 und 9 dargestellte Baugruppe auf die Montageöffnung beispielsweise einer Montageschiene aufgesetzt und wird auf den Tragwinkel 11 der Baugruppe eine Druckkraft aufgebracht, wird diese Druckkraft über die Druckfeder 15 derart an die Verankerungseinheit 1 weitergegeben, dass das Stützteil 2 über die Haltevorsprünge vorsteht und von den Drehführungsabschnitten 7 der Federarme 6 im Hohlkörper-Inneren derart verdreht wird, dass das Stützteil 2 die Haltevorsprünge der Montageschiene hintergreift. An dem Tragwinkel 11 können auch mehrere Verankerungseinheiten 1 gehalten sein, die sich durch einfachen Druck auf den Tragwinkel 11 gleichzeitig an einer Montageschiene befestigen lassen.

Statt der Verbindungsschraube 13 mit ihrem Schraubenkopf 14 kann beispielsweise auch eine Gewindestange mit einer Kontermutter verwendet werden.

In den Figuren 9 und 10 ist der Vormontagehalter 30 einer Verankerungseinheit dargestellt, die mit derjenigen in Figur 1 bis 8 vergleichbar ist. Der Vormontagehalter 30 ist als plattenförmige Flachfeder ausgestaltet, die einen umlaufenden äußeren Einspannrandbereich 16 hat. Dieser Einspannrand 16 ist mit dem Halteabschnitt 4 des Vormontagehalters 30 über die Federarme 6 verbunden. Die Federarme 6 des in den Figuren 9 und 10 dargestellten Vormontagehalters 30 können auch größere Federkräfte übertragen, die ausreichend sind, um auch schwerere Gegenstände in einer Vormontagestellung an einer Montageschiene oder dergleichen Hohlkörper sicher und fest zu halten.

Aus den Figuren 6 bis 8 ist zu entnehmen, dass durch Festziehen der Verbindungsschraube 13 oder dergleichen Verbindungselement die zwischen dem zu befestigenden Gegenstand 11 und dem Stützteil 2 in Vormontagestellung befindlichen Haltevorsprünge des Hohlkörpers fest eingespannt und der Gegenstand am Hohlkörper unverrückbar gesichert werden kann.

## Patentansprüche

1. Verankerungseinheit (1) zur Befestigung von Montagewinkeln oder dergleichen Gegenständen, mit einem Stützteil (2), welches in eine Montageöffnung eines insbesondere durch eine Montageschiene gebildeten Hohlkörpers einführbar ist, wobei das Stützteil (2) in seiner Länge größer als in seiner Breite ist und im Hohlkörper-Inneren derart verdrehbar ist, dass das Stützteil (2) an gegenüberliegenden Hohlkörper-Längsseiten innenseitig vorgesehene Haltevorsprünge hintergreifen kann, sowie mit einem als Zwischenlagekörper ausgestalteten Vormontagehalter (3, 30), der einen mit dem Stützteil (2) drehfest verbundenen Halteabschnitt (4) aufweist, welcher Halteabschnitt (4) mit zumindest zwei Federarmen (6) verbunden ist, welche die die Montageöffnung begrenzenden Ränder der Hohlkörper-Längsseiten beaufschlagen können, wobei die Federarme (6) zumindest in einem Teilbereich ihrer Außenränder in entgegengesetzte Richtungen orientierte Krümmungslinien (7) begrenzen und stegförmig ausgebildet sind, dass die Projektion der Federarme (6) auf die Ebene der Montageöffnung des Hohlkörpers eine gekrümmte Form zeigt, **dadurch gekennzeichnet, dass** die Außenränder der Federarme in ihrem gekrümmten Teilbereich Drehführungsabschnitte bilden, die mit den die Montageöffnung begrenzenden Rändern des Hohlkörpers zusammenwirken können, derart, dass der Vormontagehalter (3, 30) eine den Halteabschnitt (4) und den angrenzenden Teilbereich der Federarme (6) in das Hohlkörper-Innere pressende Druckkraft auf den Halteabschnitt (4) in eine Drehbewegung des Vormontagehalters (3, 30) und des mit ihm drehfest verbundenen Stützteils (2) umsetzt.

2. Verankerungseinheit nach Anspruch 1, **dadurch gekennzeichnet, dass** die Federarme in ihrem als Drehführungsabschnitt ausgebildeten Teilbereich einen kurven- oder spiralförmigen Außenrand (7) haben.

3. Verankerungseinheit nach Anspruch 1 oder 2, **dadurch gekennzeichnet, dass** die Federarme (6) punktsymmetrisch zum Halteabschnitt (4) ausgestaltet sind.

4. Verankerungseinheit nach einem der Ansprüche 1 bis 3, **dadurch gekennzeichnet, dass** zwischen dem Halteabschnitt (4) des Vormontagehalters (3, 30) einerseits und den Drehführungsabschnitten der Federarme (6) andererseits über den Halteabschnitt (4) radial vorstehende Verbindungsabschnitte (9) vorgesehen sind.

5. Verankerungseinheit nach einem der Ansprüche 1 bis 4, **dadurch gekennzeichnet, dass** die Federarme (6) beim Einlegen des Stützteils (2) in die Montageöffnung die die Montageöffnung begrenzenden Ränder mit ihren Drehführungsabschnitten beaufschlagen.

6. Verankerungseinheit nach einem der Ansprüche 1 bis 5, **dadurch gekennzeichnet, dass** die Federarme (6) auf der dem Halteabschnitt (4) abgewandten Seite ihrer Drehführungsabschnitte Einspannabschnitte (10) haben und dass diese Einspannabschnitte in Vormontagestellung etwa parallel zu den Hohlkörper-Längsseiten angeordnet sind.

7. Verankerungseinheit nach einem der Ansprüche 1 bis 6, **dadurch gekennzeichnet, dass** der Vormontagehalter (30) als plattenförmige Flachfeder mit einem vorzugsweise umlaufenden äußeren Einspannrandbereich (16) ausgestaltet ist, dass dieser Einspannrandbereich (16) mit dem Halteabschnitt (4) über die Federarme (6) verbunden ist.

8. Verankerungseinheit nach einem der Ansprüche 1 bis 7, **dadurch gekennzeichnet, dass** die Verankerungseinheit (1) mit dem zu befestigenden Gegenstand (11) über eine Schraube (13), eine Gewindestange oder dergleichen Verbindungselement verbunden ist, dass das Verbindungselement eine Durchstecköffnung (12) des zu befestigenden Gegenstandes (11) durchsetzt, und dass auf das Verbindungselement zumindest eine Druckfeder (15) oder dergleichen Druckelement aufgeschoben ist, dessen Druckkraft vorzugsweise größer als die Federkraft der Federarme (6) ist.

## Claims

1. Anchor unit (1) for attaching assembly brackets or similar objects, having a support member (2) which can be inserted in an assembly opening in a hollow body formed, in particular, by an assembly rail, the support member (2) being longer than it is wide and being rotatable inside the hollow body such that the support member (2) is able to engage behind retaining projections provided on the inside on opposite longitudinal walls of the hollow body, and having a pre-assembly holder (3, 30) in the form of an intermediate member, which comprises a retaining portion (4) non-rotatably connected to the support member (2), said retaining portion (4) being connected to at least two spring arms (6) which are able to act upon the edges of the longitudinal sides of the hollow body delimiting the assembly opening, while the spring arms (6) define, at least in a partial region of their outer edges, lines of curvature (7) oriented in opposite directions and are constructed as bars, such that the projection of the spring arms (6) on to the plane of the assembly opening of the hollow body exhibits a curved shape, **characterised in that** the outer edges of the spring arms form rotation guiding portions in their curved partial region, which are able to co-operate with the edges of the hollow body defining the assembly opening, such that the pre-assembly holder (3, 30) converts a compressive force pressing the retaining portion (4) and the adjacent partial region of the spring arms (6) into the interior of the hollow body into a rotary movement of the pre-assembly holder (3, 30) and the support member (2) connected for rotation therewith.

2. Anchor unit according to claim 1, **characterised in that** the spring arms have a curved or spiral outer edge (7) in their partial region constructed as a rotation guiding portion.

3. Anchor unit according to claim 1 or 2, **characterised in that** the spring arms (6) are constructed to be point-symmetrical with respect to the retaining portion (4).

4. Anchor unit according to one of claims 1 to 3, **characterised in that**, between the retaining portion (4) of the pre-assembly holder (3, 30) on the one hand and the rotation guiding portions of the spring arms (6) on the other hand, connecting portions (9) are provided which project radially over the retaining portion (4).

5. Anchor unit according to one of claims 1 to 4, **characterised in that** the spring arms (6) act on the edges delimiting the assembly opening, by means of their rotation guiding portions, when the support member (2) is inserted in the assembly opening.

6. Anchor unit according to one of claims 1 to 5, **characterised in that** the spring arms (6) have clamping portions (10) on the side of their rotation guiding portions remote from the retaining portion (4) and in the pre-assembly position these clamping portions are arranged parallel to the longitudinal sides of the hollow body.

7. Anchor unit according to one of claims 1 to 6, **characterised in that** the pre-assembly holder (30) is constructed as a plate-shaped flat spring with a preferably circumferential outer clamping edge region (16) and that this clamping edge region (16) is connected to the retaining portion (4) via the spring arms (6).

8. Anchor unit according to one of claims 1 to 7, **characterised in that** the anchor unit (1) is connected to the object (11) which is to be attached, by means of a screw (13), a threaded pin or similar connecting element, **in that** the connecting element passes through an insertion opening (12) in the object (11) which is to be attached, and **in that** at least one compression spring (15) or similar pressing element is pushed onto the connecting element, the compressive force of which is preferably greater than the spring force of the spring arms (6),

## Revendications

1. Dispositif d'ancrage (1) pour la fixation d'équerres de montage ou d'objets analogues, avec une pièce de soutien (2) qui peut être introduite dans une ouverture de montage d'un corps creux formé notamment par un rail de montage, la pièce de soutien (2) étant d'une longueur supérieure à sa largeur et rotative à l'intérieur du corps creux de telle sorte que la pièce de soutien (2) peut s'engager derrière des saillies de retenue prévues sur la face intérieure de côtés longitudinaux opposés du corps creux, et avec un élément de retenue de pré-assemblage (3, 30) réalisé sous forme de corps d'intercalation, qui présente une partie de retenue (4) qui est reliée en solidarité de rotation à la pièce de soutien (2) et qui est reliée à au moins deux bras de ressort (6) qui peuvent solliciter les bords des côtés longitudinaux du corps creux qui délimitent l'ouverture de montage, les bras de ressort (6) délimitant au moins dans une région partielle de leurs bords extérieurs des lignes de courbure (7) orientées dans des directions opposées et étant réalisés en forme de nervures, sachant que la projection des bras de ressort (6) sur le plan de l'ouverture de montage du corps creux présente une forme courbe, **caractérisé en ce que** les bords extérieurs des bras de ressort forment, dans leur région partielle courbe, des parties de guidage en rotation qui peuvent coopérer avec les bords du corps creux qui délimitent l'ouverture de montage, de telle sorte que l'élément de retenue de pré-assemblage (3, 30) transforme une force de pression, exercée sur la partie de retenue (4) et pressant la partie de retenue (4) et la région partielle attenante des bras de ressort (6) à l'intérieur du corps creux, en un mouvement de rotation de l'élément de retenue de pré-assemblage (3, 30) et de la pièce de soutien (2) qui lui est reliée en solidarité de rotation.

2. Dispositif d'ancrage selon la revendication 1, **caractérisé en ce que** les bras de ressort possèdent, dans leur région partielle conçue comme partie de guidage en rotation, un bord extérieur (7) en forme de courbe ou de spirale.

3. Dispositif d'ancrage selon la revendication 1 ou 2, **caractérisé en ce que** les bras de ressort (6) sont réalisés à symétrie ponctuelle par rapport à la partie de retenue (4).

4. Dispositif d'ancrage selon l'une des revendications 1 à 3, **caractérisé en ce que** des parties de liaison (9) dépassant radialement de la partie de retenue (4) sont prévues entre la partie de retenue (4) de l'élément de retenue de pré-assemblage (3, 30) d'une part et les parties de guidage en rotation des bras de ressort (6) d'autre part.

5. Dispositif d'ancrage selon l'une des revendications 1 à 4, **caractérisé en ce que** les bras de ressort (6), lors de l'insertion de la pièce de soutien (2) dans l'ouverture de montage, sollicitent par leurs parties de guidage en rotation les bords qui délimitent l'ouverture de montage.

6. Dispositif d'ancrage selon l'une des revendications 1 à 5, **caractérisé en ce que** les bras de ressort (6) possèdent des parties de serrage (10) sur le côté de leurs parties de guidage en rotation qui est opposé à la partie de retenue (4), et **en ce que** ces parties de serrage sont disposées, dans la position de pré-assemblage, environ parallèlement aux côtés longitudinaux du corps creux.

7. Dispositif d'ancrage selon l'une des revendications 1 à 6, **caractérisé en ce que** l'élément de retenue de pré-assemblage (30) est réalisé sous forme de ressort plat en forme de plaque ayant une région de bord de serrage (16) extérieure de préférence entourante, et **en ce que** cette région de bord de serrage (16) est reliée à la partie de retenue (4) par l'intermédiaire des bras de ressort (6).

8. Dispositif d'ancrage selon l'une des revendications 1 à 7, **caractérisé en ce que** le dispositif d'ancrage (1) est relié à l'objet (11) à fixer au moyen d'une vis (13), d'une tige filetée ou d'un élément de liaison analogue, **en ce que** l'élément de liaison traverse une ouverture de passage (12) de l'objet (11) à fixer, et **en ce qu'**au moins un ressort de pression (15) ou élément de pression analogue, dont là force de pression est supérieure à la force de ressort des bras de ressort (6), est enfilé sur l'élément de liaison.
